# EUROPEAN PATENT APPLICATION

(11) **EP 2 957 788 A1**
(43) Date of publication of application: **23.12.2015**
(21) Application number: 14425078.4
(22) Date of filing: 20.06.2014
(51) Int. Cl.: F16D 7/10, B64D 1/22, F16D 43/208, B66D 1/14

(54) **Aircraft capable of hovering with torque limiter**

(71) Applicant: AGUSTAWESTLAND S.p.A., 00195 Roma (IT)
(72) Inventor: Gasparini, Giuseppe, 21017 Samarate (IT); Angiolini, Massimiliano, 21017 Samarate (IT); Ragazzi, Matteo, 21017 Samarate (IT)
(74) Representative: Di Sciuva, Michele

(57) **Abstract**

An aircraft (1) is described that comprises: a first drive member (11); a second member (13) suitable for handling a load; and a transmission unit (8) suitable for connecting the first drive member (11) to the second member (13) in order to transmit drive torque (Cm) to the second member (13); the transmission unit (8) comprises a first element (17) rotating around an axis (D) and connected to the first drive member (11); and a second element (40) rotating around the axis (D) and connected to the second member (13) and subjected to resistance torque (Cr); the aircraft (1) comprises a limiting unit (9) for the drive torque (Cm) transmitted by the first member (11) to the second member (13), which is interposed between the first element (17) and the second element (40); the limiting unit (9) of the drive torque (Cm) comprises a stop element (35) movable, according to the magnitude of the resistance torque (Cr), between a first drive position, in which it makes the first element (17) and the second element (40) angularly integral with respect to the axis (D), and a second stop position, in which it makes the first element (17) and the second element (40) angularly free from each other with respect to the axis (D). (Figure 4)

## Description

The present invention relates to an aircraft capable of hovering, in particular a helicopter or a convertiplane.

There are known aircraft that are capable of hovering, i.e. remaining in one place in the air at a constant height and zero speed.

The helicopter and convertiplane are examples of such aircraft.

Aircraft capable of hovering are used advantageously for saving people or recovering objects in emergency situations and/or in difficult to access places, for example, saving shipwreck survivors at sea.

The salvage operation takes place using a drum carried by a fixed structure of the aircraft and a basket hanging from a cable wound/unwound from the drum and containing a load.

More precisely, the aircraft comprises a motor and a reducer interposed between the drum and the motor in order to provide the drum with the correct drive torque and angular speed.

On the other hand, the tension on the cable generates resistance torque on the drum in the opposite direction to the drive torque.

The aircraft further comprises a drive torque limiting unit, which is interposed between the reducer and the drum and able to prevent excessive torque being transmitted to the drum and, consequently, to the cable and the load.

More precisely, the function of the limiting unit is:
- to prevent transmission of drive torque to the drum in cases where the tension on the cable, i.e. the resistance torque acting on the drum, exceeds an operating threshold value, for example, equal to or slightly less than the cable's breaking load; and
- to transmit the drive torque to the drum in cases where the tension on the cable is less than the above-stated operating threshold value.

In this way, it is possible to avoid damaging the aircraft or the transported load in the event of sudden manoeuvres that transitorily increase the dynamic load lifted and/or anomalous conditions that obstruct the cable.

According to one known solution, the limiting unit comprises a clutch formed by:
- a first set of discs carried by a first shaft operationally connected to the motor; and
- a second set of discs carried by a second shaft operationally connected to the drum and frictionally cooperating with the first set of discs.

The clutch transmits drive torque between the motor and the drum when the tension on the cable is less than or equal to the operating threshold value. In addition, the clutch prevents the transmission of drive torque between the motor and the drum when the tension on the cable - and, consequently, the resistance torque on the second shaft - is greater than the operating threshold value, due to the slippage between the first set of discs and the second set of discs.

The limiting unit comprising a clutch of the above-described type is characterized by an operating threshold value that varies according to external factors that are difficult to control such as, for example, the operating temperature of the reducer, the type of lubricating oil used or the clutch adjustment and testing methods.

It follows that it is not possible to guarantee, in a precise and repeatable manner, that the maximum load on the cable does not approach the breaking load of the cable.

It also follows that it is not possible to avoid the threshold value varying so much, for example due to the above-described external factors, up to approaching normal values at which it would be necessary to transmit drive torque to the cable. In this case, the cable would unwind in an unintended manner, causing the undesired lowering of the load.

In consequence, there is a perceived need in the sector for making the operating threshold value of the limiting unit repeatable, as far as possible, in a precise and constant manner over time.

In addition, the clutch of the above-described limiting unit of known type is subject to wear and heating up in the case of prolonged operation, thereby resulting in the need to periodical perform drum maintenance and/or overhaul operations.

In consequence, there is a perceived need in the sector for reducing the need for maintenance and/or overhaul operations on the limiting unit, even in the case of prolonged operation.

Furthermore, the above-described limiting unit of known type is unable to signal whether or not torque is being transmitted from the motor to the drum.

In consequence, there is a perceived need in the sector for signalling whether or not torque is being transmitted from the motor to the drum, i.e. if the limiting unit has intervened. US 4,628,455 describes the use of torque limiters in a flight control system for a helicopter.

JP-A-2000247296 describes a method of limiting the torque for a helicopter.

The object of the present invention is to provide an aircraft capable of hovering that enables at least one of the above-stated needs to be satisfied in a simple and inexpensive manner.

The above-stated object is achieve by the present invention, in so far as it relates to an aircraft capable of hovering, comprising: a first drive member; a second member suitable for handling a load; and a transmission unit suitable for connecting said first drive member to said second member in order to transmit, in use, drive torque to said second member; said transmission unit in turn comprising: a first element rotating around an axis and operatively connected to said first drive member; and a second element rotating around said axis and operatively connected to said second member and subjected, in use, to resistance torque in the opposite direction to said drive torque and having a value associated with the weight of said load; said aircraft comprising at least one limiting unit of said drive torque transmitted, in use, from said first member to said second member; said limiting unit being interposed between said first element and said second element; said limiting unit of said drive torque comprising at least one stop element movable, according to the magnitude of said resistance torque and transversely to said axis, between: a first drive position, in which it makes said first element and said second element angularly integral with respect to said axis when said resistance torque is, in use, less than or equal to a threshold value, and a second stop position, in which it makes said first element and said second element angularly free from each other with respect to said axis when said resistance torque is, in use, greater than said threshold value.

In greater detail, said limiting unit also comprises a third member integrally rotating with said second member around said axis; said stop element being rotatable around said axis integrally with said third member and radially moveable along said axis with respect to said third member between said first drive position and second stop position.

More precisely, said third member comprises at least one groove engaged by said stop element and inside which said stop element may slide between said first drive position and second stop position radially to said axis.

Said first element comprises at least one first seat and said second element comprises at least one second seat; said first seat and second seat being open towards and in communication with said groove; said stop element engaging said first seat and said groove, so as to make said first element and said second element angularly integral with respect to said axis, when said stop element is in said first drive position; said stop element engaging said groove and said second seat and leaving said first seat empty, so as to make said first element and said second element angularly free from each other with respect to said axis, when said stop element is in said second stop position.

In a preferred embodiment, said limiting unit further comprises a fourth element, annular and movable parallel to said axis due to the movement, in use, of said stop element between said first drive position and said second stop position;
said stop element being axially interposed between said third element and said fourth element along said axis.

Said fourth element is movable in a direction parallel to said axis, between:
- a first position, in which it obstructs access to said second seat when said stop element is in said drive position; and
- a second position, in which it leaves free access to said second seat when said stop element is in said stop position.

Said fourth element further comprises a tapered stop surface with respect to said axis, facing said stop element and cooperating with said stop element.

More in particular, the aircraft comprises a plurality of said stop elements, a plurality of said grooves and a plurality of said first seats, which are arranged angularly spaced out with respect to said axis.

Preferably, the aircraft comprises elastic means able to elastically push said stop element towards said first drive position.

Said elastic means are configured to exert an elastic load on said stop element having a component parallel to said axis.

More in particular, the preloading of said elastic means is selectively adjustable, so as to vary the value of said threshold value; said aircraft comprising a ring nut that may be screwed onto one of said first member and second member; said ring nut cooperating with said elastic means on the opposite side of said fourth member.

More in particular, said elastic means cooperate with said fourth element on the opposite side of said stop element, going along said axis, so as to axially lock the stop element.

Said first element, second element and third element extend coaxially to said axis and said third element is interposed between said first element and second element in a radial direction to said axis.

In another embodiment, the aircraft comprises sensor means configured to detect if said stop element is in the drive or stop position.

Preferably, said sensor means comprise a probe housed inside a seat defined by said second element and open towards said fourth element.

For a better understanding of the present invention, a preferred embodiment will be described hereinafter, purely by way of non-limitative example and with reference to the attached drawings, where:
- Figure 1 is a side view of an aircraft capable of hovering, in particular a helicopter, made according to the principles of the present invention;
- Figure 2 shows, on a highly enlarged scale, some components of the helicopter in Figure 1;
- Figure 3 is a cross-section, on a highly enlarged scale, along line II-II in Figure 2 of a limiting unit for the drive torque transmitted to a load-hoisting basket built into the helicopter in Figure 1 and 2 and arranged in a first operating configuration;
- Figure 4 is a cross-section, on a highly enlarged scale, along line II-II in Figure 2 of a unit for interrupting the drive torque transmitted to a load-hoisting basket built into the helicopter in Figure 1 and 2 and arranged in a second operating configuration;
- Figure 5 is a cross-section along line V-V in Figure 3; and
- Figure 6 is a cross-section along line VI-VI in Figure 4.

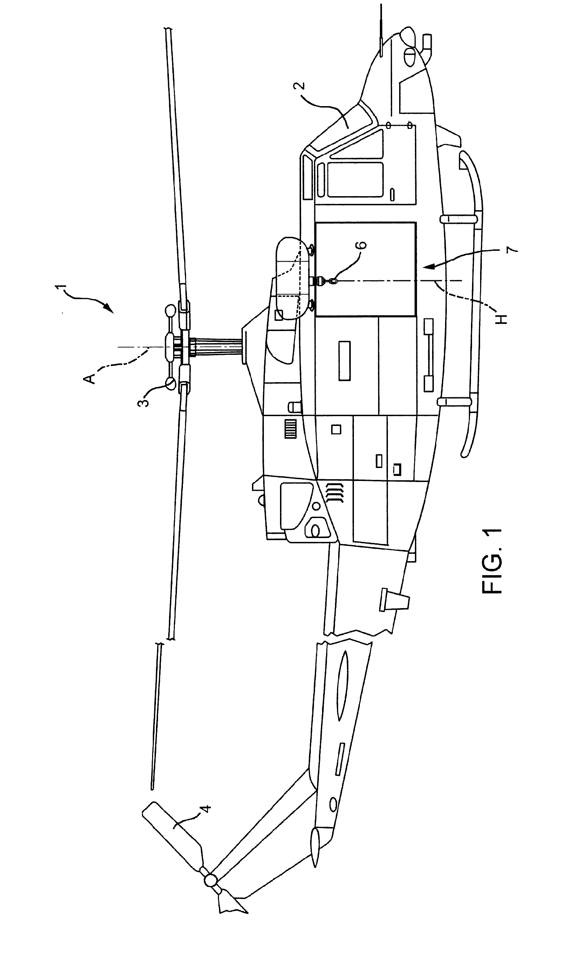

With reference to Figure 1, reference numeral 1 indicates an aircraft capable of hovering, in particular a helicopter, essentially comprising a fuselage 2, a main rotor 3 positioned on the top of the fuselage 2 and rotating around an axis A, and a tail rotor 4 positioned at one end of the fuselage 2 and rotating around its own axis transversely to axis A.

The helicopter 1 further comprises a hook 6 that may be connected to a basket (not shown) containing a load and able to move in a substantially vertical direction H, so as to cause the raising or lowering of the basket.

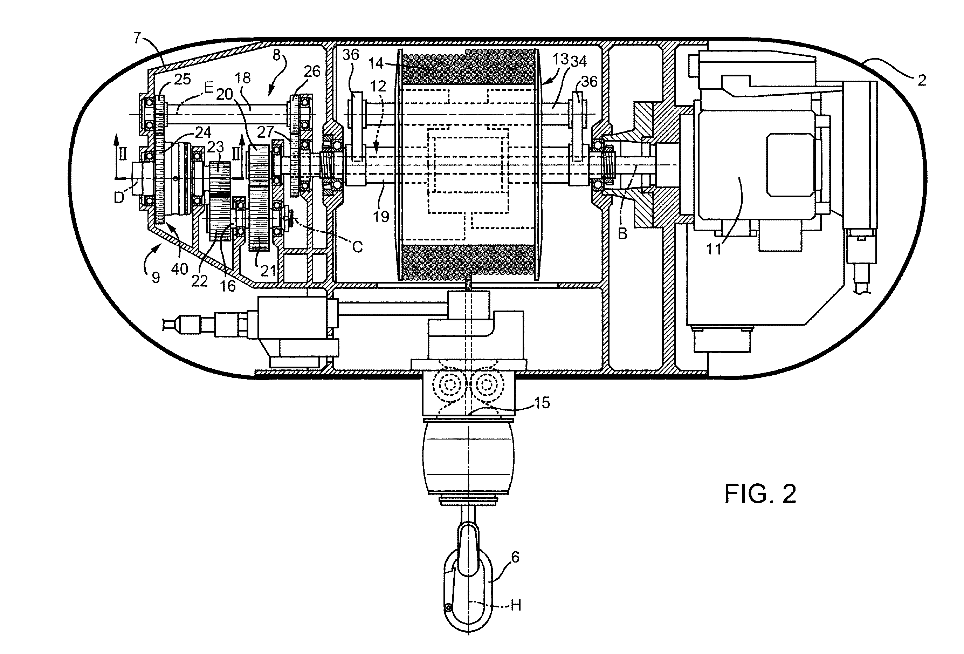

The helicopter 1 further comprises (Figure 2):
- a framework 7 defined by the fuselage 2;
- a motor 11 fastened, in the case shown, to the framework 7 and comprising, in turn, an output shaft 12 rotating around an axis B; and
- a drum 13 rotating around axis B and operatively connected to the motor 11; and
- a cable 14 wound on the drum 13 and having an end connected to the hook 6.

When the motor 11 is working, the drum 13 is subjected to drive torque Cm and resistance torque Cr. The resistance torque Cr is substantially equal to the product of the tension on the cable 14 and the radius of the drum 13. The tension on the cable 14 is substantially equal to the weight of the basket and the inertial forces acting on the basket.

In the case shown, axis B is orthogonal to direction H.

The helicopter 1 further comprises:
- a transmission unit 8 functionally interposed between the shaft 12 and the drum 13; and
- a limiter 9 to limit the drive torque Cm transmitted to the drum 13.

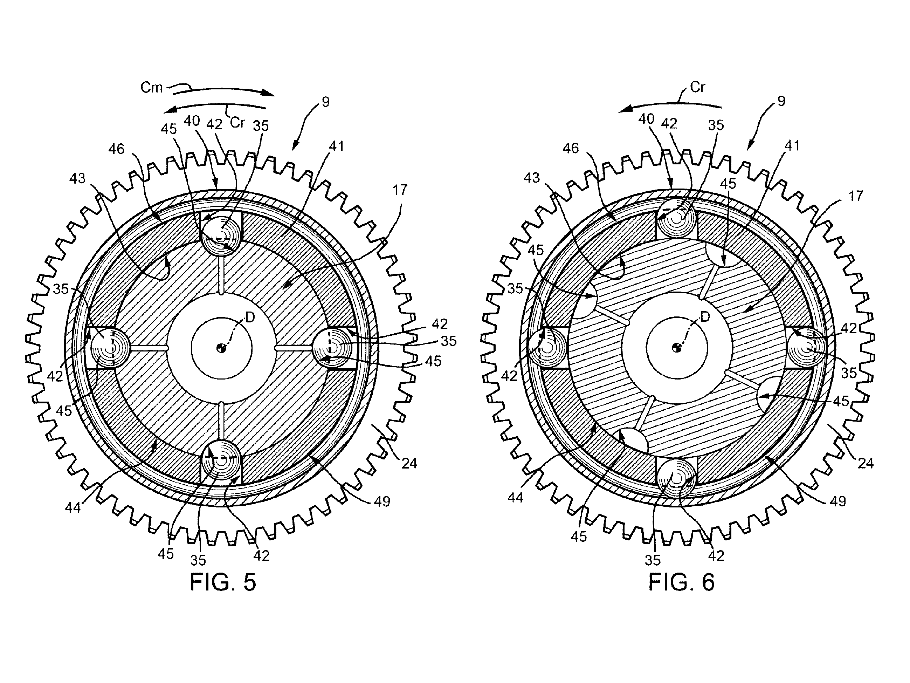

More in particular, the limiter 9 is configured to:
- transmit the drive torque Cm to the drum 13 when the resistance torque Cr is less than or equal to a threshold value (Figure 5); and
- interrupt the transmission of drive torque Cm to the drum 13 when the resistance torque Cr is greater than the threshold value (Figure 6).

In greater detail, the transmission unit 8 comprises the limiter 9.

In other words, the limiter 9 is functionally interposed between the shaft 12 and the drum 13.

In the case shown, the transmission unit 8 is a reducer, namely it is configured to:
- reduce the number of revolutions of the drum 13 with respect to the number of revolutions of the shaft 12; and
- multiply the drive torque Cm available to the drum 13 with respect to the torque supplied by the motor 11 and acting on the shaft 12.

The transmission unit 8 comprises, in the direction from the shaft 12 towards the drum 13 (Figure 2):
- a shaft 16 rotating around an axis C parallel to axis B and driven in rotation by shaft 12;
- a shaft 17 rotating around an axis D parallel to axes B and C;
- a wheel 40 rotating around axis D;
- a shaft 18 rotating around an axis E parallel to axes B, C and D; and
- a shaft 19 rotating around axis B angularly to the drum 13 and driven in rotation around axis B by shaft 18.

The transmission unit 8 further comprises:
- a set of gear teeth 20 carried on an end of shaft 12 opposite to the motor 11 and engaging with a set of gear teeth 21 carried by a first axial end of shaft 16; and
- a set of gear teeth 22 arranged on a second axial end of shaft 16 opposite to set of gear teeth 21 and engaging with set of gear teeth 23 carried on shaft 17.

Finally, the transmission unit 8 comprises:
- a set of gear teeth 24 defined by the wheel 40 and engaging with set of gear teeth 25 arranged on a first axial end of shaft 18; and
- a set of gear teeth 26 carried on a second axial end of shaft 18, opposite to set of gear teeth 25 and engaging with set of gear teeth 27 carried on an axial end of shaft 19 opposite to the drum 13.

In the case shown, shaft 19 houses shaft 12 coaxially to axis B.

In the case shown, shaft 19 rotates around axis B integrally with the drum 13.

More precisely, the transmission unit 8 comprises (Figure 2):
- a rod 34 rotating around an axis E and fastened to the drum 13;
- a pair of crosspieces 36, which extend radially from axis E and are connected in a fixed manner at their opposite ends to the rod 34 and to shaft 19.

In the case shown, axis E is eccentric with respect to axis B and is parallel to axes B, C and D.

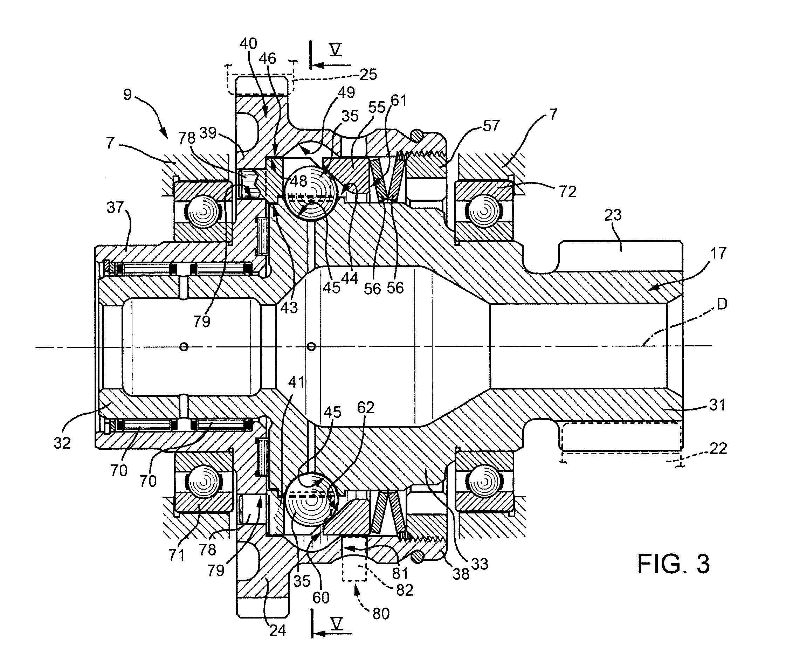

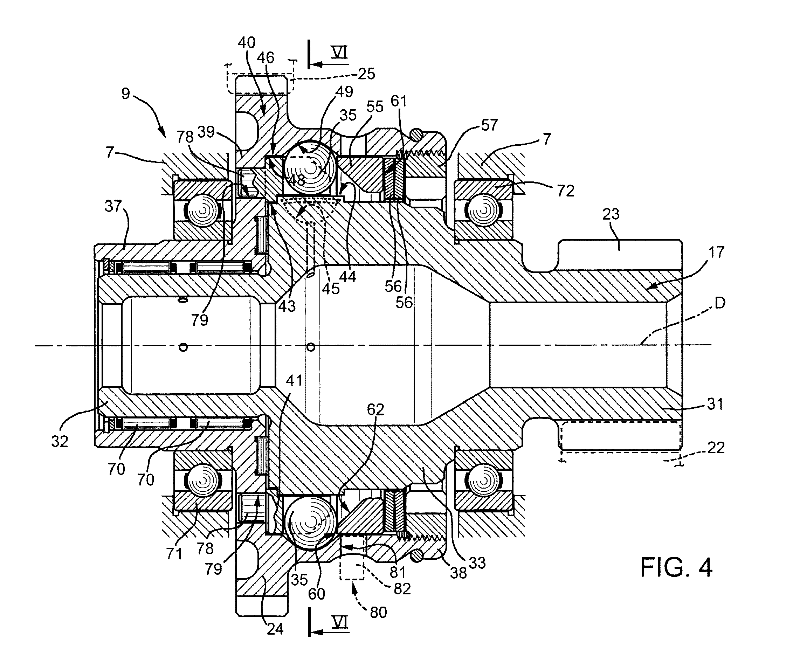

Advantageously, the limiter 9 comprises a plurality of stop elements 35, each movable transversely to axis D, according to the magnitude of the resistance torque Cr, between:
- respective drive positions (Figures 3 and 5), which make shaft 17 and the wheel 40 - and consequently the motor 11 and the drum 13 - angularly integral with respect to axis D, when the resistance torque Cr is lower than the threshold value; and
- respective stop positions (Figures 4 and 6), which make shaft 17 and the wheel 40 - and consequently the motor 11 and the drum 13 - angularly free with respect to axis D, when the resistance torque Cr is greater than the threshold value.

In particular, the stop elements 35 may be moved radially to axis D between the respective drive and stop positions.

In the case shown, the stop elements 35 are spheres.

With reference to Figures 3 to 6, the limiter 9 essentially comprises:
- shaft 17;
- the wheel 40, which houses shaft 17; and
- a ring 41 integrally rotating with wheel 40 around axis D.

With particular reference to Figures 3 and 4, shaft 17 comprises:
- an axial end portion 31, on which set of gear teeth 23 are fixed;
- an axial end portion 32, opposite to portion 31; and
- a portion 33 axially interposed between portions 32 and 31.

In the case shown, portion 33 radially projects from axis D with respect to portions 31 and 32.

Portion 33 (Figures 5 and 6) of shaft 17 is delimitated, on the opposite side from axis D, by a surface 44 defining a plurality of seats 45, four in the case shown.

The seats 45 are open on the side radially opposite axis D.

The seats 45 are shaped so as to be able to accept, at least partially, the respective stop elements 35.

In the case shown, the seats 45 are delimited by respective spherical surface portions.

The seats 45 are angularly equidistanced from each other with respect to axis D.

Ring 41 is interposed between the surface 44 of shaft 17 and the wheel 40, going in a radial direction from axis D.

Ring 41 defines a plurality of grooves 42, four in the case shown, open along respective radial directions to axis D and engaged by respective stop elements 35.

In the case shown, the grooves 42 have micro-geometric dimensions.

Ring 41 further comprises:
- a radially inner surface 43, which makes contact with the surface 44 of shaft 17; and
- a radially outer surface 46.

With reference to Figures 3 and 4, the wheel 40 essentially comprises:
- a pair of end portions 37 and 38 axially opposite to each other; and
- a boss 39 radially projecting from the axial end portions 37 and 38 and defining set of gear teeth 24.

The transmission unit 3 further comprises:
- a pair of bearings 70, of the roller type in the case shown, interposed radially to axis D between portion 32 of shaft 17 and portion 37 of the wheel 40;
- a bearing 71, of the ball type in the case shown, interposed radially to axis D between portion 37 of the wheel 40 and the framework 7; and
- a bearing 72, of the ball type in the case shown, interposed radially to axis D between shaft 17 and the framework 7.

The bearing 72 is locked on shaft 17 in a position axially interposed between surface 44 and set of gear teeth 23.

The boss 39 of the wheel 40 is delimited, in the radially inner direction to axis D, by a surface 48.

Surface 48 defines a groove 49 and is separated from surface 44 by a radial clearance.

In particular, surface 49 has a shape associated with the form of the stop elements 35.

In the case shown, the groove 49 is delimited, in a section orthogonal to axis D, by a spherical surface portion (Figures 3 and 4).

The wheel 40 is set angularly to ring 41 by a plurality of pins 78 (only two of which are visible in Figures 3 and 4), which extend parallel to axis D, are angularly equidistant with respect to axis D and are housed in respective holes 79 passing through the boss 39 in a pass-through manner with respect to direction D.

When they are arranged in the respective drive positions (Figures 3 and 5), the stop elements 35 occupy the respective seats 45 and the respective grooves 42, thus making shaft 17 and the set formed by ring 41 and wheel 40 angularly integral with each other with respect to axis D. In these respective drive positions, the stop elements 35 leave groove 49 free.

When they are arranged in the respective stop positions (Figures 4 and 6), the stop elements 35 leave the respective seats 45 empty, and engage the respective grooves 42 and groove 49, thus making shaft 17 and the set formed by ring 41 and wheel 40 angularly free from each other with respect to axis D.

The limiter 9 further comprises (Figures 3 to 6):
- a ring 55, which makes contact with the stop elements 35 and is arranged on the axially opposite side of the stop elements 35 with respect to ring 41;
- a pair of springs 56, which exert an elastic load on ring 55 parallel to axis D; and
- a ring nut 57, which is screwed onto portion 38 of the wheel 40 and cooperates with the springs 56 so as to vary the elastic load exerted on ring 55 by the springs 56.

In greater detail, ring 55 dragged by friction around axis D by the wheel 40 and by the stop elements 35 is angularly movable with respect to shaft 17 with reference to axis D.

In particular, the internal diameter of ring 55 is greater than the eternal diameter of shaft 17.

Ring 55 is axially free in the direction parallel to axis D.

More precisely, ring 55 may move parallel to axis D between:
- a first position (Figures 3 and 5), in which it is closer to the ring 41 and keeps the stop elements 35 in the respective drive positions; and
- a second position (Figures 4 and 6), in which it is further away from ring 41 and allows the stop elements 35 to be arranged in the respective stop positions.

The springs 56 exert an elastic load on ring 55, directed parallel to axis D and towards the first position.

The preloading of the springs 56 defines the threshold value of the resistance torque Cr, above which the limiter 9 prevents the transmission of drive torque Cm from the motor 11 to the drum 13.

With reference to Figures 3 and 4, ring 55 partially obstructs access to groove 49 in a radial direction to axis D when the ring 55 is arranged in the first position (Figure 4).

Otherwise, ring 55 leaves free access to groove 49 in the radial direction to axis D when ring 55 is arranged in the first position.

The ring nut 57 allows varying the preloading of the springs 56 and, consequently, the threshold value for the resistance torque Cr.

Ring 55 is delimited, in the direction parallel to axis D, by:
- a surface 60 arranged on the side of the stop elements 35; and
- a surface 61, which makes contact with the springs 56.

Ring 55 further comprises a surface 62 adjacent to surface 60, which makes contact with the stop elements 35.

Surface 62 is tapered with respect to axis D, going in a radial direction to axis D and towards axis D.

In other words, surface 62 converges towards axis D, in the direction from surface 60 towards surface 61.

In the case shown, surface 62 has a truncated-cone shape.

In the case shown, the springs 56 are of the cup type, each one comprising one or more elastic washers coaxial to axis D.

Finally, the limiter 9 comprises a sensor 80 configured to detect if the stop elements 35 are in the respective stop positions or in the respective drive positions.

In greater detail, the sensor 80 is configured to detect the position of ring 55 in a direction parallel to axis D, and consequently detect if the stop elements 35 are in the respective stop positions or in the respective drive positions.

In greater detail, the sensor 80 comprises a probe 82 housed inside a pass-through seat 81 defined by portion 47 of the wheel 40.

Seat 81 is pass-through in a radial direction to axis D.

Seat 81 is arranged next to ring 55 and is open towards ring 55 on the side of axis D, such that the probe 82 is sensitive to the position of ring 55 parallel to axis D.

Operation of the helicopter 1 is shown prior to starting from a condition in which the resistance torque Cr acting on the drum 13 is less than or equal to the threshold value, and where, in consequence, the stop elements 35 are arranged in the respective drive positions (Figures 3 and 5).

In this condition, the limiter 9 allows the transmission of drive torque Cm from the motor 11 to the drum 13, thus causing the winding/unwinding of cable 14 on the drum 13 and the raising/lowering of the hook 6 and the basket along direction H.

It follows that the drum 13 is subjected (Figure 3) to drive torque Cm and resistance torque Cr, which is due to the tension on the cable 14.

In greater detail, the motor 11 is operated and drives shaft 12 in rotation around axis B, which in turn drives shaft 17 in rotation around axis C and shaft 18 around axis D, via the sets of gear teeth 20 and 21; 22 and 23.

When the resistance torque Cr is less than or equal to the threshold value, the stop elements 35 remain in the respective drive positions.

More precisely, the stop elements 35 partially engage the seats 45 of shaft 18 and partially engage the grooves 42 of ring 41, making shaft 18 and ring 41 angularly integral with each other with respect to axis D.

In this way, the stop elements 35 make the shaft 18 and the wheel 40 integral with each other, which rotate around axis D.

The stop elements 35 are axially held along direction D from ring 55, which is, in turn, elastically pushed towards the stop elements 35 by the springs 56.

The rotation of the wheel 40 around axis D causes, via the sets of gear teeth 24 and 25, the rotation of shaft 18 around axis E and, via the sets of gear teeth 26 and 27, the rotation of shaft 19 around axis B.

The rotation of shaft 19 causes the rotation of the drum 13 around axis B and, therefore, the unwinding/winding of the cable 14 on the drum 13 and the lowering/raising of the hook 6 and the load along direction H.

In the case where the dynamic load acting on the cable 14 increases transitorily, for example, due to an unexpected manoeuvre of the helicopter 1, or in the case of anomalous conditions that obstruct the movement of the cable 14, the resistance torque Cr acting on the drum 13 suddenly increases.

In these circumstances, the limiter 9 interrupts the transmission of driving force from shaft 17 to the wheel 40 and, therefore, from the motor 11 to the drum 13.

More precisely, as shown in Figure 6, the sudden increase in resistance torque Cr causes, through shafts 18 and 19, a "braking" action on the wheel 40 and on ring 41.

In consequence, the stop elements 35 remain held inside grooves 42 of ring 41, while the seats 45 advance the respective stop elements 35 angularly to axis D, until the seats 45 are angularly staggered by the respective stop elements 35 (Figure 4).

The stop elements 35 remain integral with ring 41 and slide in the respective grooves 42 in a radial direction to axis D and on a wall facing axis D, until they become arranged in the respective stop positions shown in Figures 4 and 6.

The stop elements 35 occupy, in the respective stop positions, the respective grooves 42 and groove 49 defined by the wheel 40. Otherwise, the stop elements 35 leave the seats 45 of shaft 17 free.

It follows that shaft 17 is uncoupled from the wheel 40 and ring 41 and therefore that the motor 11 is uncoupled from the drum 13 and the cable 14.

Therefore, shaft 17 continues to turn around axis D under the action of the motor 11, while ring 41 and the wheel 40 remain stationary with respect to axis D.

The limiter 9 (Figure 6) thus prevents the transmission of drive torque Cm to the drum 13 and to the cable 14.

With reference to Figure 4, when the stop elements 35 are arranged in the respective stop positions, they push ring 55 to the second position on the opposite side from ring 41 and against the action of the springs 56. It follows that the springs 56 become compressed.

The sensor 80 detects the position of ring 55 parallel to axis D and, therefore, detects whether the stop elements 35 are in the respective drive or stop positions. In consequence, the sensor 80 detects whether or not transmission of drive torque Cm from the motor 11 to the drum 13 has been interrupted.

In the case where the resistance torque Cr again takes a value below the threshold value, the stop elements 35 return to the respective drive positions, in which they again make the shaft 17 and the set formed by wheel 40 and ring 41 integral with respect to axis D and where the motor 11 thus transmits drive torque Cm to the drum 13 again in order to raise/lower the hook and the load parallel to direction H.

In the case where it is necessary to adjust the threshold value for the resistance torque Cr, it is sufficient to screw ring nut 57 more into or out from the wheel 40.

From an examination of the helicopter 1 according to the present invention, the advantages it may provide are evident.

In particular, the stop elements 35 of the limiter 9 are arranged:
- in the respective drive positions where they make the shaft 17 and the set formed by wheel 40 and ring 41 angularly integral, when the resistance torque Cr is less than or equal to the threshold value; or
- in the respective stop positions where they make the shaft 17 and the set formed by wheel 40 and ring 41 angularly movable with respect to each other, when the resistance torque Cr is greater than the threshold value.

In consequence, the limiter 9 couples the motor 11 and the drum 13 when the resistance torque Cr is less than or equal to the threshold value.

Otherwise, the limiter 9 prevents the transmission of driving force from the motor 11 to the drum 13, when resistance torque Cr is greater than the threshold value.

In this way, the limiter 9 enables maintaining the threshold value for the resistance torque Cr, above which the motor 11 is uncoupled from the drum 13, in a more precise and constant manner over time with respect to the known solutions illustrated in the introductory part of the description.

In fact, moving the stop elements 35 between the respective drive and stop positions is substantially unaffected by external factors that are difficult to control and dependent on the operation of the limiter 9.

In this way, it is possible to ensure, in a precise and repeatable manner, that the maximum load acting on the cable 14 never approaches the breaking load of the cable 14.

The possibility of the transmission of torque between motor 11 and drum 13 being prevented for normal values of tension acting on the cable 14 due to unexpected variations in the threshold value, thereby causing undesired unwinding of the cable 14 and undesired lowering of the hook 6 and the load, is also avoided.

The high precision and repeatability of the threshold value maintained by the limiter 9 also enables ensuring that the tension on the cable 14 is kept at values slightly below the breaking load of the cable 14 when the resistance torque Cr is less than or equal to the threshold value.

The high precision and repeatability of the threshold value maintained by the limiter 9 also enables automatically restoring drive transmission from the motor 11 to the drum 13, when the overload on the cable 14 is removed.

This is of particular importance in the aeronautic sector, as the raising/lowering of the hook 6 and the basket is automatically restored without the need for external action.

The limiter 9 is substantially free of wear and prolonged heating effects, and so does not require particularly onerous periodic maintenance and/or overhaul operations.

Lastly, the sensor 80 allows detecting, in real time and with high reliability, whether or not driving force is transmitted from the motor 11 to the drum 13, based on the position of the ring 55 along axis D.

Finally, it is clear that modifications and variants may be made to the aircraft described and illustrated herein without departing from the scope defined in the claims.

In particular, the aircraft could be a convertiplane.

Furthermore, the stop elements 35 might not be spheres; for example, they could be cylinders or rollers.

## Claims

1. An aircraft (1) capable of hovering, comprising:
- a first drive member (11);
- a second member (13) suitable for handling a load; and
- a transmission unit (8) suitable for connecting said first drive member (11) to said second member (13) in order to transmit, in use, drive torque (Cm) to said second member (13) ;
said transmission unit (8) in turn comprising:
- a first element (17) rotating around an axis (D) and operatively connected to said first drive member (11); and
- a second element (40) rotating around said axis (D) and operatively connected to said second member (13) and subjected, in use, to resistance torque (Cr) in the opposite direction to said drive torque (Cm) and having a value associated with the weight of said load;
said aircraft (1) comprising at least one limiting unit (9) for said drive torque (Cm) transmitted, in use, from said first member (11) to said second member (13); said limiting unit (9) being interposed between said first element (17) and said second element (40);
**characterized in that** said limiting unit (9) of said drive torque (Cm) comprises at least one stop element (35) movable transversely to said axis (D), according to the magnitude of said resistance torque (Cr), between:
- a first drive position, in which it makes said first element (17) and said second element (40) angularly integral with respect to said axis (D), when said resistance torque (Cr) is, in use, less than or equal to a threshold value; and
- a second stop position, in which it makes said first element (17) and said second element (40) angularly free from each other with respect to said axis (D), when said resistance torque (Cr) is, in use, greater than said threshold value.

2. The aircraft according to claim 1, **characterized in that** said limiting unit (9) further comprises a third member (41) integrally rotating with said second member (40) around said axis (D);
said stop element (35) being rotatable around said axis (D) integral with said third member (41) and radially moveable along said axis (D) with respect to said third member (41) between said first drive position and said second stop position.

3. The aircraft according to claim 2, **characterized in that** said third member (41) comprises at least one groove (42) engaged by said stop element (35) and inside which said stop element (35) may slide between said first drive position and said second stop position radially to said axis (D).

4. The aircraft according to claim 2 or 3, **characterized in that** said first element (17) comprises at least one first seat (45) and said second element (40) comprises at least one second seat (49);
said first seat (45) and second seat (49) being open towards and in communication with said groove (42);
said stop element (35) engaging said first seat (45) and said groove (42), so as to make said first element (17) and said second element (40) angularly integral with respect to said axis (D), when said stop element (35) is in said first drive position;
said stop element (35) engaging said groove (42) and said second seat (49) and leaving said first seat (45) empty, so as to make said first element (17) and said second element (40) angularly free from each other with respect to said axis (D), when said stop element (35) is in said second stop position.

5. The aircraft according to any of the preceding claims, **characterized in that** said limiting unit (9) further comprises a fourth element (55), annular and movable parallel to said axis (D) due to the movement, in use, of said stop element (35) between said first drive position and said second stop position;
said stop element (35) being axially interposed between said third element (41) and said fourth element (55) along said axis (D).

6. The aircraft according to claim 5, **characterized in that** said fourth element (55) is movable in a direction parallel to said axis (D), between:
- a first position, wherein it obstructs access to said second seat (49) when said stop element (35) is in said drive position; and
- a second position, wherein it leaves free access to said second seat (49), when said stop element (35) is in said stop position.

7. The aircraft according to claim 5 or 6, **characterized in that** said fourth element (55) comprises a stop surface (62) tapered with respect to said axis (D), facing said stop element (35) and cooperating with said stop element (35).

8. The aircraft according to any of claims 4 to 7, **characterized in that** it comprises a plurality of said stop elements (35), a plurality of said grooves (42) and a plurality of said first seats (45) arranged angularly spaced out with respect to said axis (D).

9. The aircraft according to any of the preceding claims, **characterized in that** it comprises elastic means (56) able to elastically push said stop element (35) towards said first drive position.

10. The aircraft according to claim 9, **characterized in that** said elastic means (56) are configured to exert an elastic load on said stop element (35) having a component parallel to said axis (D).

11. The aircraft according to claim 9 or 10, **characterized in that** the preloading of said elastic means (56) is selectively adjustable, so as to vary the value of said threshold value;
said aircraft (1) comprising a ring nut (57) screwed onto one of said first member and second member (17, 40);
said ring nut (57) cooperating with said elastic means (56) from the opposite side of said fourth member (55).

12. The aircraft according to any of claims 11, **characterized in that** said elastic means (56) cooperate with said fourth element (55) from the opposite side of said stop element (35), going along said axis (D), so as to axially lock the stop element (35).

13. The aircraft according to any of the preceding claims, **characterized in that** said first element, second element and third element (17, 40, and 41) extend coaxially to said axis (D), and **in that** said third element (41) is interposed between said first element (17) and said second element (40) in a radial direction to said axis (D).

14. The aircraft according to any of the preceding claims, **characterized in that** it comprises sensor means (80) configured to detect if said stop element (35) is in the drive position or stop position.

15. The aircraft according to claim 14, when dependent on any of claims 5 to 13, **characterized in that** said sensor means (80) comprise a probe (82) housed inside a seat (81) defined by said second element (40) and open towards said fourth element (55).
